# EUROPEAN PATENT APPLICATION

(11) **EP 4 568 268 A1**
(43) Date of publication of application: **11.06.2025**
(21) Application number: 23863378.8
(22) Date of filing: 18.08.2023
(51) Int. Cl.: H04N 25/75, H04N 25/53, H04N 25/771, H04N 25/76

(54) **METHOD FOR READING DATA OF IMAGE SENSOR, AND IMAGE SENSOR THEREFOR**

(30) Priority: 06.09.2022 KR 20220112647; 18.10.2022 KR 20220133699
(71) Applicant: Samsung Electronics Co., Ltd., Suwon-si, Gyeonggi-do 16677 (KR)
(72) Inventor: KANG, Hwayoung, Suwon-si Gyeonggi-do 16677 (KR)
(74) Representative: Gulde & Partner
(86) International application number: PCT/KR2023/012277
(87) International publication number: WO 2024/053901

(57) **Abstract**

An electronic device according to various embodiments may include an image sensor and an image signal processor. The image sensor may include a pixel array including a plurality of pixels for detecting light, a row driver which selects a row of a pixel to be driven from among the plurality of pixels in the pixel array, and a column driver which selects a column of a pixel to be driven from among the plurality of pixels in the pixel array. The image sensor may be configured to read out a pixel value, based on a designated pixel pattern, by operations of the row driver and the column driver, and output, to the image signal processor, image data acquired based on the read-out pixel value. The pixels included in the pixel pattern may be disposed to a plurality of rows and a plurality of columns in the pixel array.

## Description

### [Technical Field]

The disclosure relates to a method of reading out data of an image sensor, and the image sensor therefor.

### [Background Art]

An image sensor reads out pixel values from pixels for detecting light to create image data. A method of reading out the pixel values may be classified into a rolling shutter scheme and a global shutter scheme according to a scheme of driving a shutter.

The rolling shutter scheme may refer to a scheme of sequentially repeating operations in which a pixel in an image sensor for configuring image data is reset in units of rows, is exposed, and then pixel values of pixels included in a corresponding row are read out in units of rows. The global shutter scheme may refer to a scheme of resetting all pixels in an array, exposing the pixels, and then sequentially reading out pixel values of pixels belonging to one row in units of rows. The rolling shutter scheme and the global shutter scheme are both a scheme in which the image sensor reads out the pixel value in units of rows.

The aforementioned information may be provided as the related art to aid understanding of the disclosure. No claim or determination is made as to whether any of the aforementioned content is applicable as the prior art related to the disclosure.

### [Disclosure of Invention]

### [Solution to Problem]

An electronic device according to an embodiment may include an image sensor and an image signal processor. The image sensor may include a pixel array comprising a plurality of pixels configured to detect light, a row driver configured to select a row of a pixel to be driven from among the plurality of pixels in the pixel array, and a column driver configured to select a column of a pixel to be driven from among the plurality of pixels in the pixel array. The image sensor may be configured to read out a pixel value, based on a designated pixel pattern, by operations of the row driver and the column driver, and output, to the image signal processor, image data acquired based on the pixel value. The designated pixel pattern may comprises pixels located in a plurality of rows and a plurality of columns of the pixel array.

A method of operating an electronic device comprising an image sensor comprising a pixel array comprising a plurality of pixels may comprise reading out a pixel value, based on a pixel pattern which designates a row and column of a pixel to be driven among pixels disposed to a plurality of rows and a plurality of columns in the pixel array. The method may include creating image data, based on the read-out pixel value. The method may include outputting the image data to the outside of the image sensor.

The image sensor according to an embodiment may comprise a pixel array comprising a plurality of pixels configured to detect light, a row driver which drives the plurality of pixels in units of rows, and a column driver which drives the plurality of pixels in units of columns. The image sensor may be configured to read out a pixel value, based on a pixel pattern designated by operations of the row driver and the column driver, and to output image data acquired based on the read-out pixel value to the outside of the image sensor. The pixels included in the pixel pattern may be disposed to a plurality of rows and a plurality of columns of the pixel array.

### [Brief Description of Drawings]

FIG. 1 is a block diagram illustrating an electronic device in a network environment according to various embodiments;
FIG. 2 is a block diagram illustrating the camera module according to various embodiments;
FIG. 3 illustrates an example for a structure of an image sensor according to an embodiment;
FIG. 4 is a block diagram illustrating a structure of an electronic device including an image sensor according to an embodiment;
FIG. 5 illustrates an operation in which an image sensor reads out a pixel value and creates image data according to an embodiment;
FIG. 6 is a drawing for explaining an operation in which an image sensor reads out a pixel value over time according to an embodiment;
FIG. 7 illustrates a structure of an image sensor for outputting image data according to an embodiment; and
FIG. 8 is a flowchart illustrating a process of operating an image sensor according to an embodiment.

### [Mode for Carrying out the Invention]

An image sensor (e.g., a Complementary Metal-Oxide Semiconductor (CMOS) image sensor) may read out pixel values of pixels included in an image sensor in units of lines (e.g., horizontal rows). In order for an image acquired through the image sensor to have uniform quality in the entire region, an environment of driving the image sensor shall be constant at a time of reading out each of lines. For example, when a voltage level for driving a sensor upon reading out a pixel value included in a first line differs from a voltage level for driving the sensor upon reading out a pixel value included in another row or when noise is included in power source, the pixel values may have different offsets. In particular, the offsets of the pixel values may be significantly amplified since a high gain value is applied to improve signal brightness in a low-illuminance environment. Therefore, noise produced in units of lines due to an offset signal may be amplified in an image. Even if the noise produced in units of lines is post-processed in an image signal processor, it may be recognized as a horizontal pattern and thus may be intensified by image processing, which may result in quality deterioration of a finally acquired image.

Accordingly, there may be a need for an image sensor capable of acquiring image data so that noise is not produced in one row or one column in image data created through the image sensor, and an operating method thereof.

Advantages acquired in the disclosure are not limited to the aforementioned advantages, and other advantages not mentioned herein may be clearly understood by those skilled in the art to which the disclosure pertains from the following descriptions.

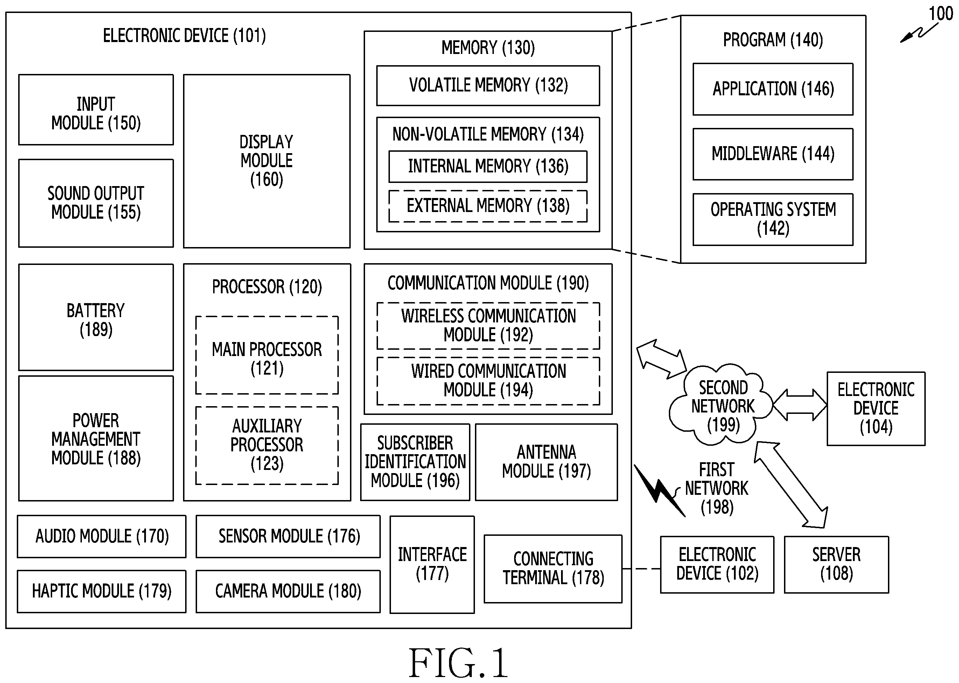

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

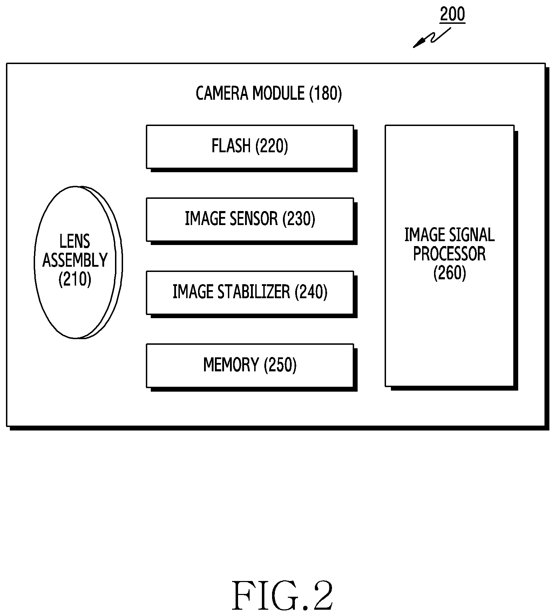

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

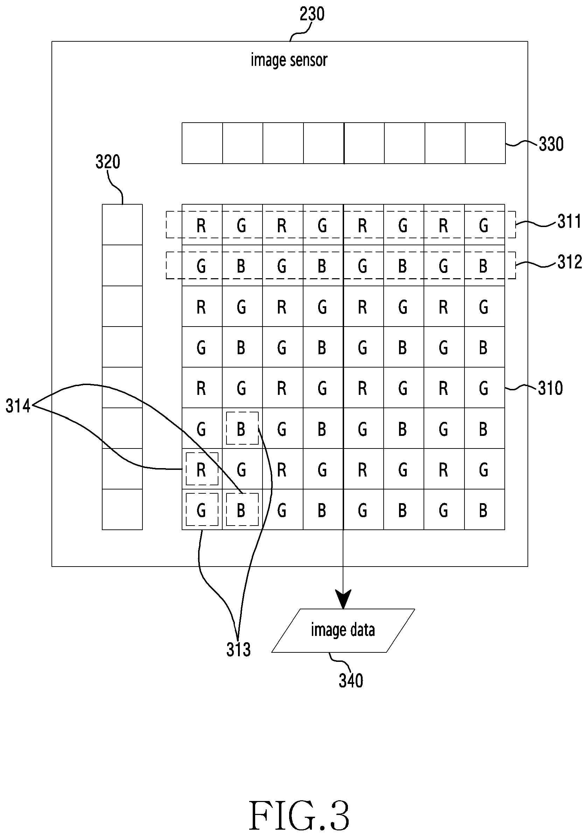

FIG. 3 illustrates an example for a structure of the image sensor 230 according to an embodiment.

The image sensor 230 according to an embodiment may include a pixel array 310 in which a plurality of pixels for detecting light are arrayed, a row driver 320, and a column driver 330. The row driver 320 may select at least one row in an array of pixels arranged in the pixel array 310. The row driver 320 may include a circuit for driving a pixel disposed to the selected at least one row. The circuit for driving the pixel disposed to the at least one row may include a row selection switch coupled between pixels of one row and the row driver 320. The row driver 320 may control the row selection switch to drive a pixel coupled to the row selection switch. The column driver 330 may select at least one column in the array of the pixels arranged in the pixel array 310. The column driver 330 may include a circuit for driving a pixel in a column selected from among pixels of a row driven by the row driver 320. The circuit for driving the pixel of the selected column may include a column selection switch controlled by the column driver 330. The column selection switch may be coupled to the column driver 330 and each of pixels of one column. The column driver 330 may control the column selection switch to operate a pixel of the selected column.

In an embodiment, the image sensor 230 may read out a pixel value by operating the row driver 320 and the column driver 330, based on a designated pixel pattern. The pixel pattern may be configured such that pixels of which pixel values are to be read out are not disposed to one row. In order for the pixels read out by a single readout operation not to be disposed to one row in an image, the image sensor 230 may perform a readout operation, based on a pixel pattern for allowing pixels included in a plurality of rows to be read out. Alternatively, in order for the read-out pixels not to be disposed to adjacent positions in the same row or column in the image, the image sensor 230 may dispose a pixel included in a pixel pattern to a plurality of rows and a plurality of columns in the pixel array 310.

The readout operation may be performed based on a pixel pattern composed of pixels disposed to non-adjacent columns, so that even if noise is produced in some readout operations, the noise does not appear in the form of a line in image data 340 which is output based on read-out pixel values.

For example, referring to FIG. 3, when a pixel value is read out in units of rows as in a rolling shutter scheme, the image sensor 230 may read out pixel values of pixels included in a first pixel group 311 disposed to one column by one readout operation. Thereafter, the image sensor 230 may read out pixel values of pixels included in a second pixel group 312 disposed to another column by another readout operation. When noise (e.g., an offset produced due to sensor voltage) is produced while reading out the second pixel group 312, a horizontal line may appear on the image data 340. When the noise is provided in the form of the horizontal line, image quality may not be sufficiently improved even if the image data 340 is undergone a post-processing operation.

On the contrary, referring to FIG. 3, according to an embodiment, the image sensor 230 may read out pixel values of pixels included in a third pixel group 313 included in a first array pattern by one readout operation. The image sensor 230 may read out pixel values of pixels included in a fourth pixel group 314 included in a second array pattern by another readout operation. Even if noise is produced while reading out the pixel values of the pixels included in the fourth pixel group 314, the noise may be included with a low level, or may not be included, in pixels around the pixels in which the noise is produced. Therefore, the noise included in the image data 340 may have low visibility. In addition, when the image data 340 is corrected through the post-processing operation, the noise may be removed more efficiently. A group of pixels included in a pixel pattern and activated may be a predetermined pattern. For example, the image sensor 230 may read out a pixel value, based on a pixel pattern configured when the image sensor 230 is manufactured. The pixel pattern according to an embodiment may be designated by a user or may be a programmable pattern. Alternatively, the pixel pattern may be determined according to a shooting environment. Alternatively, the pixel pattern may include pixels randomly selected when shooing an image. For example, when a pixel of a first column is selected to be included in a pixel pattern among pixels of a first row in a pixel array, a pixel of a second column may be selected such that a pixel disposed to the remaining rows except for the first row is included in the pixel pattern. However, the disclosure is not limited thereto. For example, with respect to a single pixel pattern, a row of a pixel to be read out in the second column may be randomly selected regardless of a row of a pixel to be read out from the first column. That is, pixels included in at least some columns in the pixel array may be disposed to the same row. In this case, however, pixels included in different pixel patterns may be selected not to overlap.

For example, the pixels included in the pixel pattern may be selected by the processor 120 or an image signal processor 420. For example, the pixels included in the pixel pattern may be selected by the row driver 320 and the column driver 330. For example, the pixel pattern may be a pixel pattern stored in a memory 410.

In an embodiment, the image sensor 230 may output the image data 340, based on pixel values acquired by multiple readout operations. For example, the image sensor 230 may store the pixel values acquired by the readout operation in a line buffer memory or a memory included in the image sensor 230. The image sensor 230 may output the image data 340 created by combining pixel values stored in a line buffer to the outside of the image sensor 230 through an interface (e.g., a Mobile Industry Processor Interface (MIPI)). For example, the image sensor 230 may output the image data 340 to an image signal processor (e.g., the image signal processor 260 of FIG. 2).

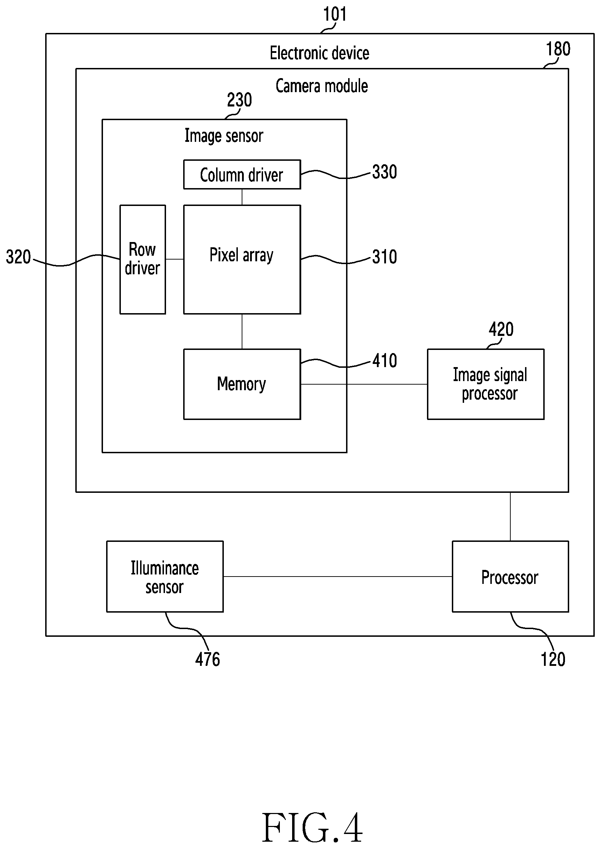

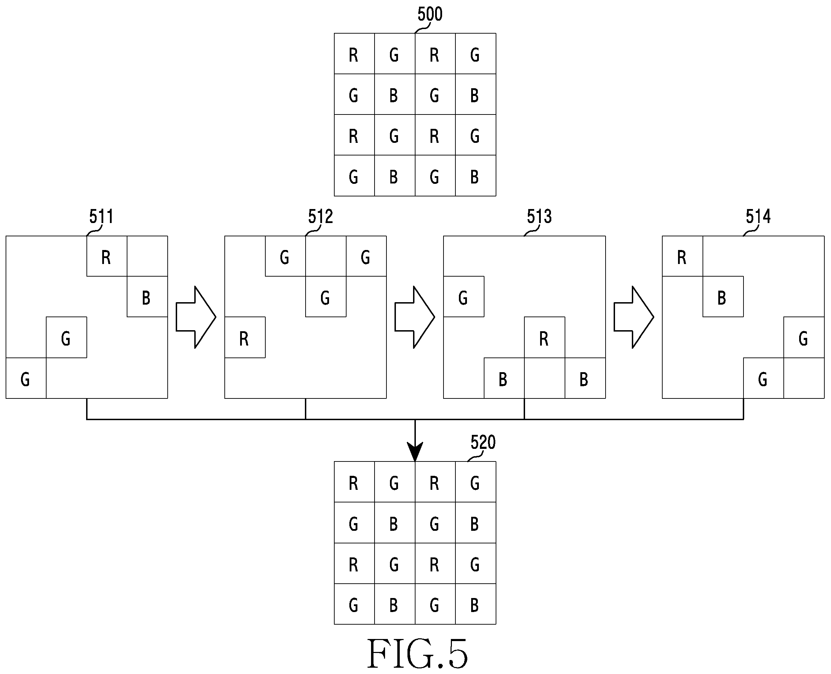

FIG. 4 is a block diagram illustrating a structure of the electronic device 101 including the image sensor 230 according to an embodiment. FIG. 5 illustrates an operation in which the image sensor 230 reads out a pixel value and creates image data according to an embodiment.

The electronic device 101 according to an embodiment may include the camera module 180 including the image sensor 230 and the image signal processor 420 (e.g., the image signal processor 260 of FIG. 2). The image sensor 230 according to an embodiment may include the pixel array 310 having a plurality of pixels arranged thereon, the row driver 320, the column driver 330, and the memory 410. The image sensor 230 may drive pixels selected in the pixel array 310 by the row driver 320 and the column driver 330 to read out pixel values of pixels belonging to a pixel group corresponding to a pixel pattern. The image sensor 230 may store the read-out pixel values in the memory 410. The memory 410 may be a buffer memory for temporarily storing pixel values to be read out until the pixel values are output as image data. The memory 410 according to an embodiment may include information on the pixel pattern.

The image sensor 230 according to an embodiment may be configured to acquire image data by restoring an array pattern so as to correspond to the pixel array 310, based on the pixel values stored in the memory 410. The image sensor 230 may output the acquired image data to the image signal processor 420.

For example, referring to FIG. 5, FIG. 5 illustrates a process of creating image data with a pixel array 500 composed of a 4x4 bayer pattern. The image sensor 230 may acquire pixel values of a first pixel group 511 corresponding to a first pattern through a first readout operation. The acquired pixel values of the first pixel group 511 may be stored in the memory 410. The image sensor 230 may acquire pixel values of a second pixel group 512 corresponding to a second pattern through a second readout operation. The acquired pixel values of the second pixel group 512 may be stored in the memory 410. The image sensor 230 may acquire pixel values of a third pixel group 513 corresponding to a third pattern through a third readout operation. The acquired pixel values of the third pixel group 513 may be stored in the memory 410. The image sensor 230 may acquire pixel values of a fourth pixel group 514 corresponding to a fourth pattern through a fourth readout operation. The acquired pixel values of the fourth pixel group 514 may be stored in the memory 410. Pixels in the pixel array 500 may be restored by combining pixels included in the first pixel group 511, second pixel group 512, third pixel group 513, and fourth pixel group 514 stored in the memory 410. Therefore, the image sensor 230 may create image data 520, based on the pixel values stored in the memory 410.

Since the memory 410 shall be generally included to read out a pixel value in this structure, there may be no problem in that the image sensor 230 increases in size to have the memory 410 even if the image sensor 230 according to an embodiment reads out the pixel value and creates image data, based on an array pattern.

The image signal processor 420 according to an embodiment may process one or more images for the image data. For example, the image signal processor 420 may interpolate a pixel value of a pixel in which noise is produced by using a pixel value of a neighboring pixel, thereby reducing the noise produced in the image data. Pixels of which pixel values are read out by one readout operation may be disposed not to overlap each other. Since the pixel value of the neighboring pixel of the noise-produced pixel may not include noise, visibility of noise produced in the image may be reduced by interpolation.

The electronic device 101 according to an embodiment may include the at least one processor 120 operatively coupled to the camera module 180. The at least one processor 120 may control the camera module 180 to select a pixel pattern through which the image sensor 230 reads out an image according to a shooting condition at a time at which the electronic device 101 shoots the image through the camera module 180. The shooting condition may include an operating state of the electronic device 101 (or the camera module 180) and/or a condition for a surrounding environment of the electronic device 101 at a time of shooting an image. The operating state of the electronic device 101 may relate to, for example, a shooting mode configured to shoot the image, internal temperature of the electronic device 101, or power supplied to the electronic device 101.

The condition for the surrounding environment of the electronic device 101 may relate to, for example, illuminance around the electronic device 101. The electronic device 101 according to an embodiment may further include an illuminance sensor 476 (e.g., the sensor module 176 of FIG. 1). The at least one processor 120 may acquire information related to an illuminance value through the illuminance sensor 476. However, the disclosure is not limited thereto. For example, the at least one processor 120 may acquire information related to the illuminance value from information on light detected through the image sensor 230.

The at least one processor 120 of the electronic device 101 according to an embodiment may determine whether to apply a pixel pattern used by the image sensor 230 to read out a pixel value, based on a shooting condition, or may determine a type of the pixel pattern. For example, the at least one processor 120 may control the camera module 180 so that the image sensor 230 reads out a pixel value in units of a single row (e.g., the first pixel group 311, the second pixel group 312 of FIG. 3) without having to apply a pre-determined pixel pattern when the illuminance value is greater than or equal to a threshold, based on the acquired illuminance value. The at least one processor 120 may control the camera module 180 to read out the pixel value in units of the pre-determined pixel pattern (e.g., the third pixel group 313, the fourth pixel group 314 of FIG. 3) when the illuminance value is less than the threshold, based on the acquired illuminance value.

According to an embodiment, the at least one processor 120 or the image signal processor 420 may analyze image data output from the image sensor 230. The at least one processor 120 or the image signal processor 420 may determine a pattern, based on a result of analyzing the image data. The at least one processor 120 or the image signal processor 420 may be configured to update information on the pixel pattern stored in the memory 410, based on the determined pattern. The image sensor 230 may read out the pixel value, based on the updated pixel pattern.

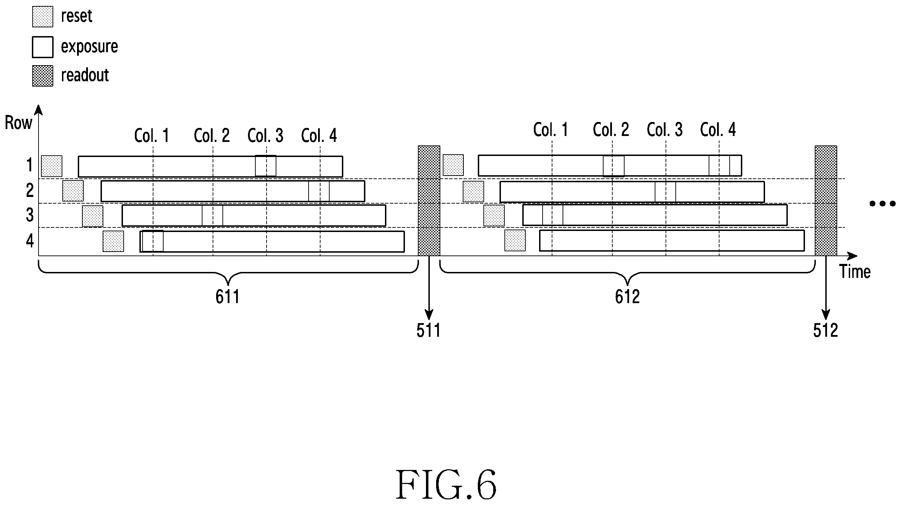

FIG. 6 is a drawing for explaining an operation in which the image sensor 230 reads out a pixel value over time according to an embodiment.

The image sensor 230 according to an embodiment may perform a first readout operation 611. The image sensor 230 may reset pixels of each row through the row driver 320 and may proceed exposure of the reset pixels. The image sensor 230 according to an embodiment may sequentially reset the pixels of each row and may initiate the exposure. The image sensor 230 may selectively drive through the column driver 330 a pixel of a column from which a pixel value is to be read out from each row while driving each row. For example, during the first readout operation 611, the image sensor 230 may drive a pixel of a third column Col.3 among pixels of a first row, a pixel of a fourth column Col.4 among pixels of a second row, a pixel of a second column Col.2 among pixels of a third row, and a pixel of a first column Col.1 among pixels of a fourth row. The image sensor 230 may read out pixel values for the first pixel group 511 including the driven pixels.

In an embodiment, the image sensor 230 may reset pixels of each row through the row driver 320 and may proceed exposure of the reset pixels. During a second readout operation 612, the image sensor 230 may selectively drive through the column driver 330 a pixel of a column from which a pixel value is to be read out from each row while driving each row. For example, during the second readout operation 612, the image sensor 230 may selectively drive a pixel of a second column Col.2 and fourth column Col.4 among pixels of a first row, a pixel of a third column Col.3 among pixels of a second row, and a pixel of a first column Col.1 among pixels of a third row. The image sensor 230 may read out pixel values for the second pixel group 512 including the driven pixels.

In an embodiment, there may be a time difference between a timing of reading out the first pixel group 511 and a timing of reading out the second pixel group 512. The time difference between the pixel groups may correspond to a value obtained in such a manner that the number of lines of pixels to be read out in a sensor array is multiplied by a readout time required to read out one line, and a result thereof is divided by the number of pixel groups. An image signal processor (e.g., the image signal processor 420 of FIG. 4) according to an embodiment may correct image data to reduce image distortion which occurs due to a difference of timings of reading out pixel values of pixels included in the image data. Since the time difference between the timings of reading out the pixels included in the image data is a value pre-determined according to a configuration of an image sensor (e.g., the image sensor 230 of FIG. 2 to FIG. 4), the image signal processor (e.g., the image signal processor 420 of FIG. 4) may be configured to correct the time difference between the pixels in the image data.

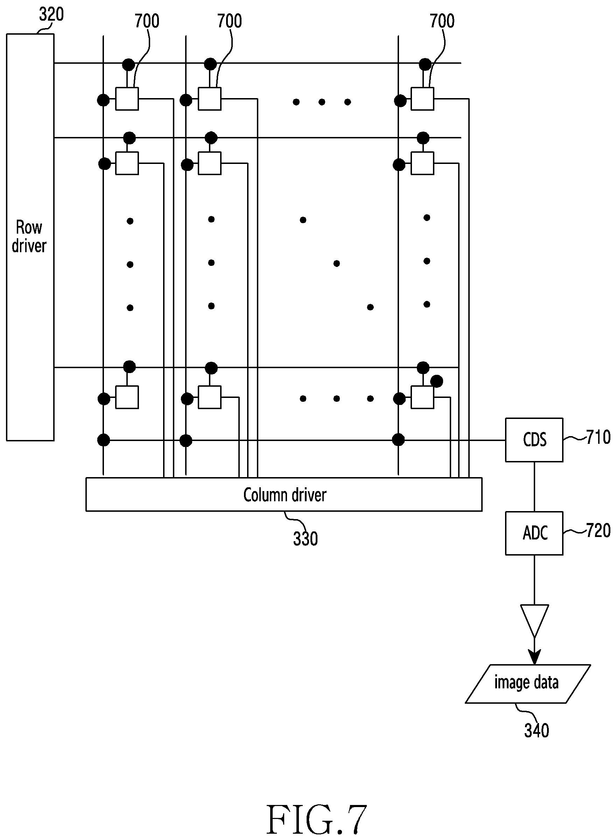

FIG. 7 illustrates a structure of the image sensor 230 for outputting image data according to an embodiment.

In an embodiment, the image sensor 230 may include imaging elements 700 disposed in a two-dimensional grid pattern on an imaging surface. The image elements 700 may include a photoelectric conversion element to constitute a pixel which outputs an electrical signal upon receiving light. A control signal may be input to each of the imaging elements 700 through a horizontal control line and a vertical control line.

In an embodiment, the vertical control line may be coupled to the column driver 330. The horizontal control line may be coupled to the row driver 320. The row driver 320 and the column driver 330 may control an operation of the imaging elements 700, based on an exposure control signal. For example, the row driver 320 and the column driver 330 may be coupled to a timing generator which receives an input of the exposure control signal from the outside.

An output pixel signal output from each of the imaging elements 700 may be configured to pass through a switch for performing selection in units of columns. A pixel signal output from a pixel of a selected column may be input to a Correlated Double Sampling (CDS) circuit 710. Reset noise may be suppressed in the CDS circuit 710 and input to an Analog-Digital Converter (ADC) circuit 720. An analog signal may be converted into a digital signal in the ADC circuit 720, and the image data 340 may be output to the outside of the image sensor 230.

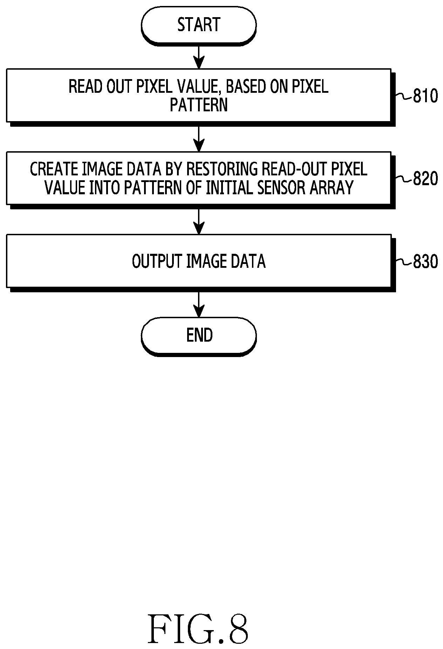

FIG. 8 is a flowchart illustrating a process of operating the image sensor 230 according to an embodiment.

In operation 810, the image sensor 230 according to an embodiment may read out a pixel value, based on a pixel pattern. The pixel pattern for reading out the pixel value may include a pixel array so that, even if a signal containing noise is detected in some readout operations, the signal containing noise does not appear in the form of a line (e.g., a horizontal line) in image data. The image sensor 230 according to an embodiment may repeat an operation of reading out the pixel value, based on different patterns multiple times to acquire pixel values of the sensor array. In operation 810, the image sensor 230 may perform an operation of storing the read-out pixel value in the memory 410 included in the image sensor 230.

According to an embodiment, in operation 810, the image sensor 230 may determine a scheme of reading out the pixel value, based on an illuminance value. For example, the image sensor 230 may read out the pixel value in units of a single row when the illuminance value is greater than or equal to a threshold. The image sensor may read out the pixel value in units of the pixel pattern when the illuminance value is less than the threshold.

In operation 820, the image sensor 230 according to an embodiment may create image data by arraying the read-out pixel value into a pattern of an initial sensor array. The image sensor 230 according to an embodiment may acquire the image data, based on data stored in the memory in the image sensor 230 in operation 810.

In operation 830, the image sensor 230 according to an embodiment may output the created image sensor to the outside of the image sensor 230. For example, the image sensor 230 may output the image data to the image signal processor 420.

The output image data may be corrected by interpolating pixel values included in the image data to reduce noise included in the image data.

An electronic device (e.g., the electronic device 101 of FIG. 1 or 4) according to an embodiment may include an image sensor (e.g., the image sensor 230 of FIG. 2, 3, or 4) and an image signal processor (e.g., the image signal processor 260 of FIG. 2, the image signal processor 420 of FIG. 4). The image sensor (e.g., the image sensor 230 of FIG. 2, 3, or 4) may include a pixel array (e.g., the pixel array 310 of FIG. 3 or 4, the pixel array 500 of FIG. 5) including a plurality of pixels for detecting light, a row driver (e.g., the row driver 320 of FIG. 3, 4, or 7) which selects a row of a pixel to be driven from among the plurality of pixels in the pixel array (e.g., the pixel array 310 of FIG. 3 or 4), and a column driver (e.g., the column driver 330 of FIG. 3, 4, or 7) which selects a column of a pixel to be driven from among the plurality of pixels in the pixel array (e.g., the pixel array 310 of FIG. 3 or 4, the pixel array 500 of FIG. 5). The image sensor (e.g., the image sensor 230 of FIG. 2, 3, or 4) may be configured to read out a pixel value, based on a designated pixel pattern (e.g., the pixel patterns 511, 512, 513, and 514 of FIG. 5), by operations of the row driver (e.g., the row driver 320 of FIG. 3, 4, or 7) and the column driver; and output, to the image signal processor (e.g., the image signal processor 260 of FIG. 2, the image signal processor 240 of FIG. 4), image data acquired based on the read-out pixel value. Pixels included in the pixel pattern (e.g., the pixel patterns 511, 512, 513, and 514 of FIG. 5) may be disposed to a plurality of rows and a plurality of columns in the pixel array (e.g., the pixel array 310 of FIG. 3 or 4, the pixel array 500 of FIG. 5).

According to an embodiment, the image sensor (e.g., the image sensor 230 of FIG. 2, 3, or 4) may further include a memory (e.g., the memory 410 of FIG. 4). The image sensor (e.g., the image sensor 230 of FIG. 2, 3, or 4) may be configured to store the read-out pixel value in the memory (e.g., the memory 410 of FIG. 4), and acquire the image data by restoring an array pattern, based on the pixel value stored in the memory (e.g., the memory 410 of FIG. 4).

According to an embodiment, the image signal processor (e.g., the image signal processor 260 of FIG. 2, the image signal processor 420 of FIG. 4) may be configured to acquire image data corrected by interpolating pixel values included in the image data.

The electronic device (e.g., the electronic device 101 of FIG. 1 or 4) according to an embodiment may further include an illuminance sensor (e.g., the illuminance sensor 476 of FIG. 4) and at least one processor (e.g., the processor 120 of FIG. 1 or 4) operatively coupled to the illuminance sensor (e.g., the illuminance sensor 476 of FIG. 4) and the image sensor (e.g., the image sensor 230 of FIG. 2, 3, or 4). The at least one processor (e.g., the processor 120 of FIG. 1 or 4) may be configured to acquire an illuminance value through the illuminance sensor (e.g., the illuminance sensor 476 of FIG. 4), and control the image sensor (e.g., the image sensor 230 of FIG. 2, 3, or 4) such that the image sensor (e.g., the image sensor 230 of FIG. 2, 3, or 4) determines the pixel pattern (e.g., the pixel pattern 511, 512, 513, or 514 of FIG. 5), based on the illuminance value.

According to an embodiment, the at least one processor (e.g., the processor 120 of FIG. 1 or 4) may be configured to control the image sensor (e.g., the image sensor 230 of FIG. 2, 3, or 4) such that the image sensor (e.g., the image sensor 230 of FIG. 2, 3, or 4) reads out a pixel value in units of a single row when the illuminance value is greater than or equal to a threshold, and control the image sensor (e.g., the image sensor 230 of FIG. 2, 3, or 4) such that the image sensor (e.g., the image sensor 230 of FIG. 2, 3, or 4) reads out the pixel value in units of the pixel pattern (e.g., the pixel pattern 511, 512, 513, or 514 of FIG. 5) when the illuminance value is less than the threshold.

According to an embodiment, the image sensor (e.g., the image sensor 230 of FIG. 2, 3, or 4) may include a row selection switch coupled between the row driver (e.g., the row driver 320 of FIG. 3, 4, or 7) and pixels of one row in the pixel array (e.g., the pixel array 310 of FIG. 3 or 4, the pixel array 500 of FIG. 5), and a plurality of column selection switches coupled to the column driver and respective pixels of one column in the pixel array (e.g., the pixel array 310 of FIG. 3 or 4, the pixel array 500 of FIG. 5). The image sensor (e.g., the image sensor 230 of FIG. 2, 3, or 4) may be configured such that, based on the pixel pattern (e.g., the pixel patterns 511, 512, 513, and 514 of FIG. 5), the row driver (e.g., the row driver 320 of FIG. 3. 4, or 7) controls the row selection switch, and the column driver controls each of the plurality of column selection switch.

According to an embodiment, the pixel pattern (e.g., the pixel patterns 511, 512, 513, and 514 of FIG. 5) may include a group of pixels selected in the pixel pattern (e.g., the pixel patterns 511, 512, 513, and 514 of FIG. 5).

According to an embodiment, the image sensor (e.g., the image sensor 230 of FIG. 2, 3, or 4) may further include the memory (e.g., the memory 410 of FIG. 4) including information on the pixel pattern (e.g., the pixel patterns 511, 512, 513, and 514 of FIG. 5).

According to an embodiment, the at least one processor (e.g., the processor 120 of FIG. 1 or 4) may be configured to analyze the image data, and determine a pattern, based on a result of analyzing the image data. The at least one processor (e.g., the processor 120 of FIG. 1 or 4) may be configured to update the information on the pixel pattern (e.g., the pixel patterns 511, 512, 513, and 514 of FIG. 5) stored in the memory (e.g., the memory 410 of FIG. 4) as the determined pattern.

According to an embodiment, pixels included in the pixel pattern (e.g., the pixel patterns 511, 512, 513, and 514 of FIG. 5) may be pixels not adjacent to each other in the pixel array (e.g., the pixel array 310 of FIG. 3 or 4, the pixel array 500 of FIG. 5).

A method of operating an electronic device (e.g., the electronic device 101 of FIG. 1 or 4) having an image sensor (e.g., the image sensor 230 of FIG. 2, 3, or 4) including a pixel array (e.g., the pixel array 310 of FIG. 3 or 4, the pixel array 500 of FIG. 5) including a plurality of pixels may include reading out a pixel value, based on a pixel pattern (e.g., the pixel patterns 511, 512, 513, and 514 of FIG. 5) which designates a row and column of a pixel to be driven among pixels disposed to a plurality of rows and a plurality of columns in the pixel array. The method may include creating image data, based on the read-out pixel value. The method may include outputting the image data to the outside of the image sensor (e.g., the image sensor 230 of FIG. 2, 3, or 4).

According to an embodiment, the reading-out may include storing the read-out pixel value in a memory (e.g., the memory 410 of FIG. 4) included in the image sensor (e.g., the image sensor 230 of FIG. 2, 3, or 4). The creating of the image data may include acquiring the image data by restoring an array pattern, based on the pixel value stored in the memory (e.g., the memory 410 of FIG. 4).

The method according to an embodiment may further include acquiring image data corrected by interpolating pixel values stored in the image data.

The method according to an embodiment may further include acquiring an illuminance value. The reading-out may include reading out, by the image sensor (e.g., the image sensor 230 of FIG. 2, 3, or 4), a pixel value in units of a single row when the illuminance value is greater than or equal to a threshold, and reading out, by the image sensor (e.g., the image sensor 230 of FIG. 2, 3, or 4), the pixel value in units of the pixel pattern (e.g., the pixel patterns 511, 512, 513, and 514 of FIG. 5) when the illuminance value is less than the threshold.

According to an embodiment, pixels included in the pixel pattern (e.g., the pixel patterns 511, 512, 513, and 514 of FIG. 5) may be pixels not adjacent to each other in the pixel array (e.g., the pixel array 310 of FIG. 3 or 4, the pixel array 500 of FIG. 5).

The image sensor (e.g., the image sensor 230 of FIG. 2, 3, or 4) according to an embodiment may include a pixel array (e.g., the pixel array 310 of FIG. 3 or 4, the pixel array 500 of FIG. 5) including a plurality of pixels for detecting light, a row driver (e.g., the row driver 320 of FIG. 3, 4, or 7) which drives the plurality of pixels in units of rows, and a column driver which drives the plurality of pixels in units of columns. The image sensor (e.g., the image sensor 230 of FIG. 2, 3, or 4) may be configured to read out a pixel value, based on a pixel pattern (e.g., the pixel patterns 511, 512, 513, and 514 of FIG. 5) designated by operations of the row driver (e.g., the row driver 320 of FIG. 3, 4, or 7) and the column driver, and to output image data acquired based on the read-out pixel value to the outside of the image sensor (e.g., the image sensor 230 of FIG. 2, 3, or 4). The pixels included in the pixel pattern (e.g., the pixel patterns 511, 512, 513, and 514 of FIG. 5) may be disposed to a plurality of rows and a plurality of columns in the pixel array (e.g., the pixel array 310 of FIG. 3 or 4, the pixel array 500 of FIG. 5).

The image sensor (e.g., the image sensor 230 of FIG. 2, 3, or 4) according to an embodiment may further include the memory (e.g., the memory 410 of FIG. 4). The image sensor (e.g., the image sensor 230 of FIG. 2, 3, or 4) may be configured to store the read-out pixel value in the memory (e.g., the memory 410 of FIG. 4), and acquire the image data by restoring an array pattern, based on the pixel value stored in the memory (e.g., the memory 410 of FIG. 4).

The image sensor (e.g., the image sensor 230 of FIG. 2, 3, or 4) according to an embodiment may further include a row selection switch coupled between the row driver (e.g., the row driver 320 of FIG. 3, 4, or 7) and pixels of one row in the pixel array (e.g., the pixel array 310 of FIG. 3 or 4, the pixel array 500 of FIG. 5), and a plurality of column selection switches coupled to the column driver and respective pixels of one column in the pixel array (e.g., the pixel array 310 of FIG. 3 or 4, the pixel array 500 of FIG. 5). The image sensor (e.g., the image sensor 230 of FIG. 2, 3, or 4) may be configured such that, based on the pixel pattern (e.g., the pixel patterns 511, 512, 513, and 514 of FIG. 5), the row driver e.g., the row driver 320 of FIG. 3. 4, or 7) controls the row selection switch, and the column driver controls each of the plurality of column selection switch.

According to an embodiment, the pixel pattern (e.g., the pixel patterns 511, 512, 513, and 514 of FIG. 5) may include a group of pixels selected in the pixel pattern (e.g., the pixel patterns 511, 512, 513, and 514 of FIG. 5).

According to an embodiment, pixels included in the pixel pattern (e.g., the pixel patterns 511, 512, 513, and 514 of FIG. 5) may include pixels not adjacent to each other in the pixel array (e.g., the pixel array 310 of FIG. 3 or 4, the pixel array 500 of FIG. 5).

According to embodiments of the disclosure, there may be provided an electronic device including an image sensor capable of reducing visibility of the produced noise, and an operating method thereof, since noise caused by an operational environment which varies depending on a timing of reading out a pixel value is produced in units of pixels without having a pattern (e.g., in units of lines).

According to embodiments of the disclosure, there may be provided an electronic device including an image sensor capable of acquiring image data, and an operating method thereof, since noise caused by an operational environment which varies depending on a timing of reading out a pixel value is produced in units of pixels, thereby acquiring image data to easily detect and correct the noise.

Advantages acquired in the disclosure are not limited to the aforementioned advantages, and other advantages not mentioned herein may be clearly understood by those skilled in the art to which the disclosure pertains from the following descriptions.

Methods based on the embodiments disclosed in the claims and/or specification of the disclosure may be implemented in hardware, software, or a combination of both.

When implemented in software, computer readable recording medium for storing one or more programs (i.e., software modules) may be provided. The one or more programs stored in the computer readable recording medium are configured for execution performed by one or more processors in the electronic device. The one or more programs include instructions for allowing the electronic device to execute the methods based on the embodiments disclosed in the claims and/or specification of the disclosure.

The program (i.e., the software module or software) may be stored in a random access memory, a non-volatile memory including a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs) or other forms of optical storage devices, and a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network such as the Internet, an Intranet, a Local Area Network (LAN), a Wide LAN (WLAN), or a Storage Area Network (SAN) or a communication network configured by combining the networks. The storage device may have access to a device for performing an embodiment of the disclosure via an external port. In addition, an additional storage device on a communication network may have access to the device for performing the embodiment of the disclosure.

In the aforementioned specific embodiments of the disclosure, a component included in the disclosure is expressed in a singular or plural form according to the specific embodiment proposed herein. However, the singular or plural expression is selected properly for a situation proposed for the convenience of explanation, and thus the various embodiments of the disclosure are not limited to a single or a plurality of components. Therefore, a component expressed in a plural form may also be expressed in a singular form, or vice versa.

In addition, in the disclosure, the term "unit", "module", or the like may be a hardware component such as a processor or a circuit, and/or a software component executed by the hardware component such as the processor.

The "unit" and the "module" may be implemented by a program stored in an addressable storage medium and executable by the processor. For example, the "unit" and "module" may be implemented by software components, object-oriented software components, class components, and task components, processes, functions, attributes, procedures, subroutines, segments of program code, drivers, firmware, microcode, circuitry, data, databases, data structures, tables, arrays, and variables.

Specific implementations described in the disclosure are only one embodiment, and do not limit the scope of the disclosure in any way. For brevity of the specification, descriptions on the conventional electronic components, control systems, software, and other functional aspects of the systems may be omitted.

**In** addition, in the disclosure, "including at least one of a, b, or c" may mean "including only a", "including only b", "including only c", "including a and b", "including b and c", " including a and c", or "including a, b, and c".

While the disclosure has been shown and described with reference to certain preferred embodiments thereof, it will be understood by those skilled in the art that various changes in form and details may be made therein without departing from the spirit and scope of the disclosure as defined by the appended claims. Therefore, the scope of the disclosure is defined not by the detailed description thereof but by the appended claims, and all differences within equivalents of the scope will be construed as being included in the disclosure.

## Claims

1. An electronic device comprising:
an image sensor; and
an image signal processor,
wherein the image sensor comprises:
a pixel array comprising a plurality of pixels configured to detect light;
a row driver configured to select a row of a pixel to be driven from among the plurality of pixels in the pixel array; and
a column driver configured to select a column of a pixel to be driven from among the plurality of pixels in the pixel array,
wherein the image sensor is configured to:
read out a pixel value, based on a designated pixel pattern, by operation of the row driver and the column driver, and
output, to the image signal processor, image data acquired based on the pixel value, and
wherein the designated pixel pattern comprises pixels located in a plurality of rows and a plurality of columns of the pixel array.

2. The electronic device of claim 1, wherein the image sensor further comprises a memory,
wherein the image sensor is configured to:
store the read-out pixel value in the memory; and
acquire the image data by generating an array pattern, based on the pixel value stored in the memory.

3. The electronic device of claim 1, wherein the image signal processor is configured to acquire image data corrected by interpolating pixel values included in the image data.

4. The electronic device of claim 1, further comprising:
an illuminance sensor; and
at least one processor operatively coupled to the illuminance sensor and the image sensor,
wherein the at least one processor is configured to:
acquire an illuminance value through the illuminance sensor; and
control the image sensor such that the image sensor determines the pixel pattern, based on the illuminance value.

5. The electronic device of claim 3, wherein the at least one processor is configured to:
based on the illuminance value being greater than or equal to a threshold, control the image sensor to read out the pixel value in units of a single row; and
based on the illuminance value being less than the threshold, control the image sensor to read out the pixel value in units of the pixel pattern .

6. The electronic device of claim 1, wherein the image sensor comprises:
a row selection switch coupled between the row driver and pixels of a row of the pixel array; and
a plurality of column selection switches coupled to the column driver and respective pixels of one column in the pixel array,
wherein the row driver is configured to control the row selection switch, and the column driver is configured to control each of the plurality of column selection switches, based on the pixel pattern.

7. The electronic device of claim 1, wherein the pixel pattern includes a group of pixels selected in the pixel pattern.

8. The electronic device of claim 1, wherein the image sensor further comprises a memory including information on the pixel pattern.

9. The electronic device of claim 8, wherein the at least one processor is configured to:
analyze the image data;
determine a pattern, based on a result of analyzing the image data; and
update the information on the pixel pattern stored in the memory as the determined pattern.

10. The electronic device of claim 1, wherein pixels included in the pixel pattern are pixels not adjacent to each other in the pixel array.

11. A method of operating an electronic device comprising an image sensor comprising a pixel array comprising a plurality of pixels, the method comprising:
reading out a pixel value, based on a pixel pattern which designates a row and column of a pixel to be driven among pixels located in a plurality of rows and a plurality of columns in the pixel array;
creating image data, based on the read-out pixel value; and
outputting the image data to the outside of the image sensor.

12. The method of claim 11,
wherein the reading-out comprises storing the read-out pixel value in memory included in the image sensor, and
wherein the creating of the image data comprises acquiring the image data by restoring an array pattern, based on the pixel value stored in the memory.

13. The method of claim 11, further comprising acquiring image data corrected by interpolating pixel values included in the image data.

14. The method of claim 11, further comprising acquiring an illuminance value,wherein the reading-out comprises reading out, by the image sensor, a pixel value in units of a single row when the illuminance value is greater than or equal to a threshold, and reading out, by the image sensor, the pixel value in units of the pixel pattern when the illuminance value is less than the threshold.

15. The method of claim 11, wherein pixels included in the pixel pattern are pixels not adjacent to each other in the pixel array.
